# EUROPÄISCHE PATENTSCHRIFT

(11) **EP 0 991 968 B1**
(45) Veröffentlichungstag und Bekanntmachung des Hinweises auf die Patenterteilung: **13.03.2002**
(21) Anmeldenummer: 98934832.1
(22) Anmeldetag: 29.05.1998
(51) Int. Cl.: G02B 6/38

(54) **STECKVERBINDER ZUR LÖSBAREN VERBINDUNG EINES LICHTWELLENLEITERS MIT EINEM WEITEREN LICHTWELLENLEITER**
PLUG-IN CONNECTOR FOR DETACHABLE CONNECTION OF AN OPTICAL WAVEGUIDE TO ANOTHER OPTICAL WAVEGUIDE
CONNECTEUR ENFICHABLE POUR CONNECTER DE FA ON LIBERABLE UN GUIDE D'ONDE OPTIQUE A UN AUTRE GUIDE D'ONDE OPTIQUE

(30) Priorität: 24.06.1997 DE 19726855
(43) Veröffentlichungstag der Anmeldung: 12.04.2000
(73) Patentinhaber: Tyco Electronics Logistics AG, 9323 Steinach / SG (CH)
(72) Erfinder: BLECK, Oliver, D-67361 Freisbach (DE); SCHMIDT, Helge, D-67346 Speyer (DE)
(74) Vertreter: Klunker . Schmitt-Nilson . Hirsch
(86) Internationale Anmeldenummer: DE9801478
(87) Internationale Veröffentlichungsnummer: WO9859270

(56) Entgegenhaltungen:
- EP-A- 0 034 987
- EP-A- 0 602 726
- WO-A-86/02740

## Beschreibung

Die Erfindung betrifft einen Steckverbinder zur lösbaren Verbindung eines mit einer Ferrule versehenen Endbereichs eines Lichtwellenleiters mit einem weiteren Lichtwellenleiter in einer Einsteckrichtung gemäß Oberbegriff des Anspruchs 1.

Bei Lichtwellenleitern und insbesondere bei Mehrfach-Lichtwellenleitern ist es häufig notwendig, einen Endbereich eines Lichtwellenleiters derart mit einem weiteren Lichtwellenleiter zu verbinden, daß ein optisches Signal von einem Lichtwellenleiter auf den nächsten Lichtwellenleiter übertragen wird. Hierzu werden Endbereiche der Lichtwellenleiter in sogenannten Ferrulen gehalten, die im einfachsten Fall das zu verbindende Ende des Lichtwellenleiters fassen, um es leichter handhabbar zu machen. Gerade bei Mehrfach-Lichtwellenleitern, die mehrere Einzelfasern aufweisen, werden die Einzelfasern in einer definierten linearen oder matrixförmigen Anordnung in der Ferrule gehalten, so daß bei einem Übergang zwischen zwei miteinander verbundenen Ferrulen jeweils eine definierte Faser des einen Mehrfach-Lichtwellenleiters mit einer weiteren definierten Faser des anderen Mehrfach-Lichtwellenleiters in Kontakt kommen. Um zu verhindern, daß bei einer Belastung der Verbindung zweier Lichtwellenleiter ein Lichtwellenleiter zu stark belastet wird, weisen Steckverbinder Zugentlastungen auf, die stets so ausgeführt sind, daß der Lichtwellenleiter in einem Gehäuse fixiert wird, so daß sich auf den Lichtwellenleiter aufgebrachte Kräfte direkt auf das Gehäuse übertragen, ohne die Verbindung zwischen Ferrule und Lichtwellenleiter zu belasten.

Dabei hat es sich herausgestellt, daß die bekannten Steckverbinder besonders häufig zu Montageproblemen und/oder Problemen bei der Datenübertragung führen, wenn diese nicht zur Herstellung von fliegenden Verbindungen zwischen Lichtwellenleitern verwendet werden, sondern beispielsweise als auf einer Platine befestigte Anschlüsse verwendet werden.

In Übereinstimmung mit dem Oberbegriff des Anspruchs 1 zeigt die EP 0 400 732 einen Steckverbinder, bei dem der Krümmungsbegrenzungsbereich durch eine Hülse gebildet wird, die auf einer Schraubenfeder sitzt, wobei Schraubenfeder und Hülse den Lichtwellenleiter zwischen dem Zugentlastungsbereich und dem Haltebereich für die Ferrule lose umgeben.

Die WO 86/92740 zeigt einen Steckverbinder für optische Lichtwellenleiter. Der Steckverbinder weist ein Paar Steckbauteile auf, von denen jedes ein Bauteil hält, das die Form eines Pyramidenstumpfes hat. Zur Verbindung der Lichtwellenleiter sind starr zueinander gehaltene Ferrulen vorgesehen, die jeweils die Enden der Lichtwellenleiter aufnehmen.

Die EP 0 602 726 A1 zeigt einen Steckverbinder für optische Lichtwellenleiter, mit dem diese an eine Backplane angeschlossen werden können. Zur Verbindung der Lichtwellenleiter ist eine gehaltene Ferrule vorgesehen, die die Enden der Lichtwellenleiter aufnimmt.

Die EP 0 034 987 A1 zeigt einen Steckverbinder für optische Lichtwellenleiter, bei dem Endbereiche der beiden Lichtwellenleiter in einer gemeinsamen flexiblen Ferrule gefaßt werden. Die Ferrule wird zwischen zwei Hülsen derart zusammengedrückt, daß ein verbleibender Hohlraum um die Endbereiche der beiden Lichtwellenleiter herum vollständig ausgefüllt wird.

Es daher Aufgabe der Erfindung, einen gattungsgemäßen Steckverbinder bereitzustellen, der insbesondere zum zuverlässigen und einfachen Anschluß von Lichtleiterkabeln an und durch Platinen verwendet werden kann.

Diese Aufgabe wird gemäß der Erfindung sowohl für Einzelfaserferrulen als auch für Mehrfaserferrulen gelöst durch die Merkmale des Anspruchs 1. Vorteilhafte Ausgestaltungen ergeben sich aus den abhängigen Ansprüchen.

Die Erfindung beruht auf dem Grundgedanken, daß bei Lichtwellenleitern große Verluste auftreten, wenn der Lichtwellenleiter über eine höchstzulässige Krümmung hinaus verkrümmt wird. Gerade bei den im Stand der Technik bekannten Steckverbindern kann es leicht vorkommen, daß der Lichtwellenleiter aufgrund einer Verlagerung der Ferrule so verkrümmt wird, daß die maximal zulässige Krümmung überschritten wird.

Mit der erfindungsgemäßen Ausgestaltung wird bei geeigneter Auslegung des Krümmungsbegrenzungsbereichs eine Ausbiegung des Lichtwellenleiters über eine höchstzulässige Krümmung hinaus verhindert. Dadurch wird in allen Fällen eine zuverlässige Übertragung von Daten gewährleistet.

Der Krümmungsbegrenzungsbereich weist wenigstens eine im Querschnitt rampenförmige Anlaufwand auf, die so ausgebildet und angeordnet ist, daß der Lichtwellenleiter bei winkeliger Verlagerung der Ferrule wenigstens teilweise linienförmig mit der Anlaufwand in Kontakt tritt. Gerade bei einer linienförmigen Berührung zwischen Lichtwellenleiter und Anlaufwand ist gewährleistet, daß bei einer Begrenzung der Krümmung des Lichtwellenleiters lokal keine zu hohe mechanische Belastung des Lichtwellenleiters auftritt. Darüber hinaus kann durch die entsprechende Ausbildung der Anlaufwand sichergestellt werden, daß der Lichtwellenleiter über die ganze Länge des linienförmigen Kontakts eine vorbestimmte maximale Krümmung einnimmt. Gerade bei Mehrfach-Lichtwellenleitern ist eine flache und bauchig ausgebildete Rampe wünschenswert, während bei einem runden Lichtwellenleiter, der sich nach allen Seiten hin ausbiegen kann, auch ein Anlaufkegel vorgesehen sein kann.

In Ausgestaltung der Erfindung weist der Haltebereich ein bewegliches Auflageelement auf, das ein Anschlagende der Ferrule trägt.. Dabei liegt das Anschlagende der Ferrule derjenigen Stirnfläche der Ferrule gegenüber, an der die Lichtwellenleiter austreten. Das Auflageelement kann hierzu um eine quer zu Steckrichtung des Steckverbinders verlaufende Achse kippbar ausgebildet sein. Dazu können im Gehäuse Auflagestellen zum Tragen des Auflageelements vorgesehen sein, wobei die Auflagestellen vorzugsweise als Auflagekanten oder als vom Gehäuse abstehende Auflagepunkte ausgebildet sind. Alternativ dazu kann auch das Auflageelement abstehende Auflagepunkte aufweisen.

In einer besonderen Ausgestaltung ist das Auflageelement als elastisch verformbare Platte ausgebildet, wobei diese die Gestalt eines U-förmigen Metallbauteils haben kann. Gerade beim Ausbilden des Auflageelements als elastisch verformbare Platte kann auf einfache Weise gewährleistet werden, daß die Ferrule räumlich in alle Richtungen bezüglich der Einsteckrichtung verlagerbar ist. Dazu wird die verformbare Platte zum einen mit Auflagepunkten versehen, um die das Auflageelement herum winklig verkippbar ist. Darüber hinaus werden Seitenränder des Auflageelements an Auflagekanten angelegt, so daß sich die Platte durchbiegen kann. Wenn dann zusätzlich durch Anschläge sichergestellt ist, daß bei großen Kräften die Durchbiegung begrenzt wird, dann kann auf einfache Weise ein zuverlässig arbeitender Steckverbinder bereitgestellt werden.

Die Erfindung ist anhand zweier Ausführungsbeispiele in der Zeichnung dargestellt.
- Figur 1: zeigt eine perspektivische Ansicht eines erfindungsgemäßen Steckverbinders mit einem Mehrfach-Lichtwellenleiter in unbelastetem Zustand,
- Figur 2: zeigt ein Gehäuse des Lichtwellenleiters aus Figur 1,
- Figur 3 und Figur 4: zeigen einen Teilbereich des Gehäuses aus Figur 1,
- Figur 5: zeigt den Teilbereich des Steckverbinders aus Figur 1 in belastetem Zustand.
- Figur 6: zeigt ein Auflageelement des Steckverbinders gemäß Figur 5,
- Figur 7: zeigt eine Teilansicht des Steckverbinders aus Figur 1 in einem weiteren belasteten Zustand, und
- Figur 8 und Figur 9: zeigen einen Teilbereich eines Gehäuses eines weiteren erfindungsgemäßen Steckverbinders.

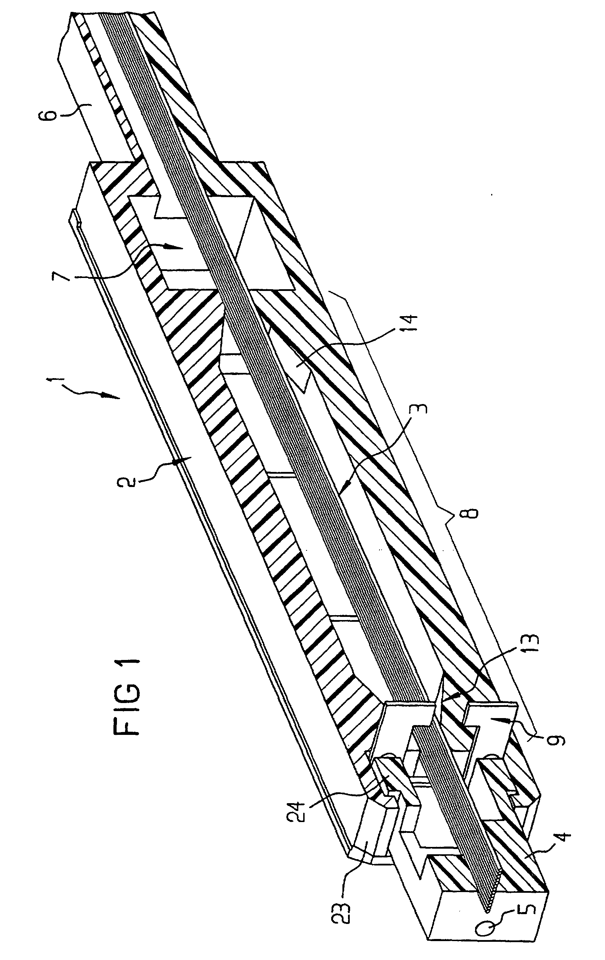

Figur 1 zeigt einen erfindungsgemäßen Steckverbinder 1 in perspektivischer Ansicht. Der Steckverbinder 1 ist entlang einer Längs-Symmetrielinie geschnitten dargestellt, so daß Einblick in das Innere des Steckverbinders 1 gewährleistet ist.

Im Gehäuse 2 ist ein flacher Mehrfach-Lichtwellenleiter 3 aufgenommen, der an einem Austrittsende mit einer Ferrule 4 versehen ist. Die Ferrule 4 weist zylindrische Führungsbohrungen 5 auf, in die in dieser Ansicht nicht gezeigte Führungsstifte eingesteckt werden können.

An dem der Ferrule 4 gegenüberliegenden Ende des Gehäuses 2 ist eine Austrittstülle 6 für den Mehrfach-Lichtwellenleiter 3 vorgesehen. An die Austrittstülle 6 schließt sich ein Zugentlastungsbereich 7 an, in dem der Mehrfach-Lichtwellenleiter 3 fest mit dem Gehäuse 2 verbunden ist. Im Bereich zwischen der Ferrule 4 und dem Zugentlastungsbereich 7 ist im Gehäuse 2 ein Krümmungsbegrenzungbereich 8 vorgesehen. Die Ferrule 4 wird zum Krümmungsbegrenzungsbereich 8 hindurch ein Auflageelement 9 getragen, das eine räumliche Verschwenkbarkeit der Ferrule 4 bezüglich des Gehäuses 2 sowie eine Begrenzung dieser Verschwenkbarkeit gewährleistet.

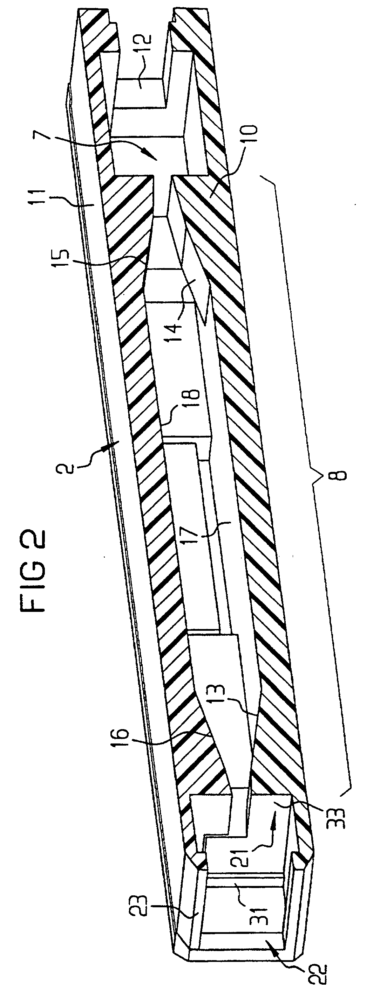

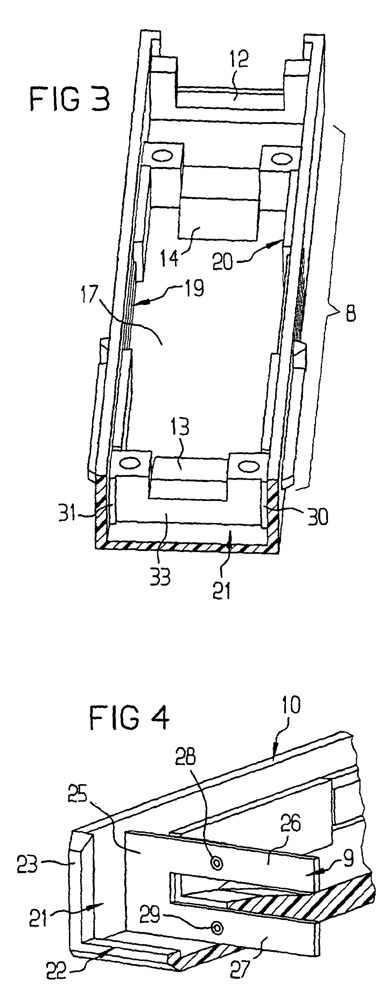

Figur 2 zeigt das Gehäuse 2 aus Figur 1 ohne eingesetzte zusätzliche Bauteile des Steckverbinders 1. Wie man in dieser Ansicht besonders gut sieht, gliedert sich das Gehäuse 2 in eine Gehäusewanne 10, die auch in Figur 3 perspektivisch in der Draufsicht dargestellt ist, und in einen Gehäusedeckel 11, der so ausgebildet ist, daß er die Oberseite der oben offenen Gehäusewanne 10 vollständig verschließt. Die Gehäusewanne 10 und der Gehäusedeckel 11 bilden an dem in Figur 2 rechts und in Figur 3 hinten gelegenen Ende eine Tüllenöffnung 12 mit rechteckigem Querschnitt aus. An die Tüllenöffnung 12 schließt sich der im Umriß kubische Zugentlastungsbereich 7 an, der in montiertem Zustand des Steckverbinders 1 mit Haltematerial gefüllt wird.

In den Figuren 2 und 3 ist der Krümmungsbegrenzungsbereich 8 besonders gut zu sehen. Der Krümmungsbegrenzungsbereich 8 weist oben- und untenseitig je zwei Rampen 13, 14, 15 und 16 auf. In einem Bodenbereich 17 zwischen den Rampen 13 und 14 sowie in einem Beckenbereich 18 zwischen den Rampen 15 und 16 verläuft der Krümmungsbegrenzungsbereich 8 parallel zu den Außenkanten des Gehäuses 2. Der Krummungsbegrenzungsbereich 8 wird zu beiden Seiten durch im wesentlichen gerade Seitenwände 19 und 20 begrenzt. An den Krümmungsbegrenzungsbereich 8 schließt sich eine Ferrulenkammer 21 an, die zur Aufnahme der Ferrule 4 dient. Die Ferrulenkammer 21 hat austrittsseitig eine Austrittsöffnung 22, die nach vorne hin einen sich verjüngenden Austrittskragen 23 aufweist. Der Austrittskragen 23 wirkt mit einem an der Ferrule 4 vorgesehenen Absatz 24 zusammen, und verhindert das Herausfallen der Ferrule 4 aus der Ferrulenkammer 21.

Figur 4 zeigt einen Teilbereich der Gehäusewanne 10 mit der Ferrulenkammer 21, wobei das Auflageelement 9 in die Ferrulenkammer 21 eingesetzt ist. Wie man in dieser Ansicht besonders gut sieht, ist das Auflageelement 9 als Blechbauteil ausgebildet, das in der Draufsicht einen U-förmigen Grundriß hat. Das Auflageelement 9 gliedert sich dabei in eine in Figur 4 linksseitig gelegene Basis 25 sowie in einen oben gelegenen ersten Flügel 26 und einen unten gelegenen zweiten Flügel 27. Der erste Flügel 26 ist mittig mit einer ersten Erhöhung 28 versehen, die durch Einpressen in den ersten Flügel 26 ausgeformt ist. Ebenso ist der zweite Flügel 27 mit einer zweiten Erhöhung 29 versehen.

Das Auflageelement 9 liegt in eingesetztem Zustand in die Ferrulenkammer 21 auf einem ersten Absatz 30 und auf einem zweiten Absatz 31 auf, wie am besten in den Figuren 2 und 3 zu sehen ist. Dabei ist die Basis 25 auf dem zweiten Absatz 31 angeordnet, während die beiden Enden des ersten Flügels 26 und des zweiten Flügels 27 auf dem ersten Absatz 30 aufliegen.

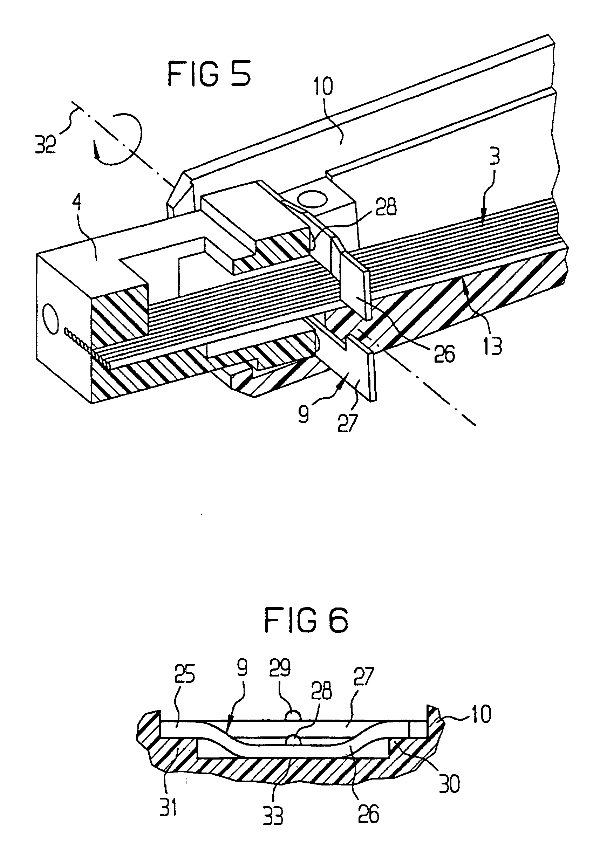

Figur 5 veranschaulicht eine winkelige Verlagerung der Ferrule 4 im Gehäuse 2 um eine Achse 32. Wie man in dieser Ansicht besonders gut sieht, wird dabei der Mehrfach-Lichtwellenleiter 3 ausgehend von der in Figur 1 gezeigten Position nach unten gedrückt, bis er an der Rampe 13 und an der in dieser Ansicht nicht gezeigten Rampe 14 anliegt. Der notwendige Spielausgleich zwischen der Ferrule 4 und der Ferrulenkammer 21 wird durch eine Verformung des Auflageelements 9 erreicht. Dabei wird der erste Flügel 26 durch die Hinterkante der Ferrule 4 nach unten gedrückt, weil die Hinterkante der Ferrule 4 auf die erste Erhebung 28 einwirkt. Der zweite Flügel 27 bleibt unverändert und gerade.

Figur 6 zeigt einen Abschnitt der Ferrulenkammer 21 mit dem verformten Auflageelement 9 aus Figur 5 im Querschnitt. Wie man in dieser Ansicht besonders gut sieht, bleibt der zweite Flügel 27 unverformt, während der erste Flügel 26 aufgrund der Einwirkung der Ferrule auf die erste Erhebung 28 nach unten gedrückt ist, bis er an einem Bodenstück 33 der Ferrulenkammer 21 anliegt. Dadurch wird der maximale Verkippungswinkel der Ferrule 4 um die Achse 32 festgelegt.

Durch das Anliegen des Mehrfach-Lichtwellenleiters 3 an den Rampen 13 und 14 wird ebenfalls verhindert, daß dieser um mehr als eine höchstzulässige Krümmung verkrümmt wird.

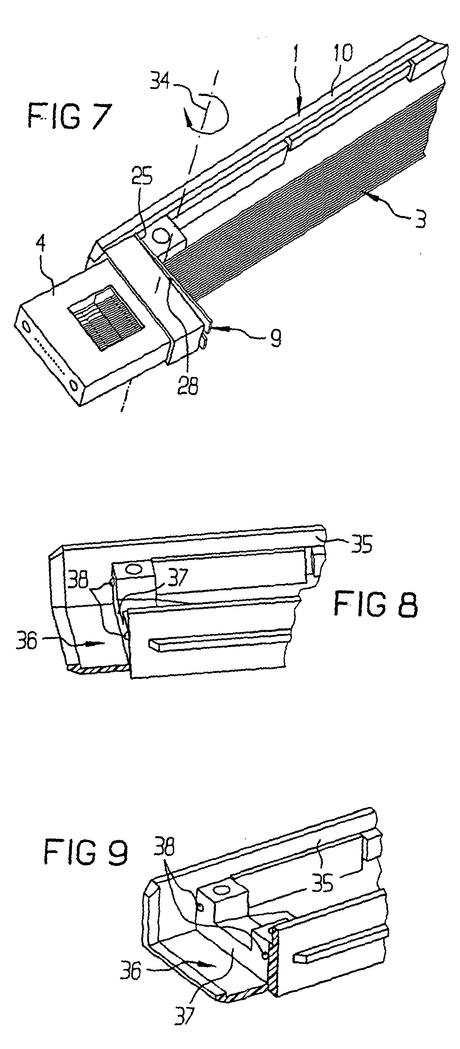

Figur 7 zeigt eine perspektivische Ansicht des Steckverbinders 1 aus Figur 1, bei dem die Ferrule um eine Achse 34 herum winkelig aus ihrer in Figur 1 gezeigten Ausgangslage verlagert ist. Wie man in dieser Ansicht besonders gut sieht, befindet sich das Auflageelement 9 in einem unverformten Zustand, wobei die Hinterkante der Ferrule 4 um die erste Erhöhung 28 und um die zweite Erhöhung 29 herum gekippt ist, da diese Auflagen bilden. Der Verdrehweg der Ferrule 4 um die Achse 34 herum wird dadurch begrenzt, daß eine Seitenkante der hinteren Auflagefläche der Ferrule 4 an der Basis 25 der Ferrule 4 anliegt. Dadurch wird wirksam verhindert, daß eine höchstzulässige Krümmung des Mehrfach-Lichtwellenleiters 3 um die Achse 34 herum überschritten wird.

Die Figuren 8 und 9 zeigen perspektivische Ansichten eines Teilbereichs einer weiteren erfindungsgemäßen Gehäusewanne 35 mit einer Ferrulenkammer 36. Die Ferrulenkammer 36 entspricht im wesentlichen der Ferrulenkammer 21 aus den Figuren 1 bis 7. Im Unterschied zu der Ferrulenkammer 21 sind jedoch an einem Bodenstück 37 keinerlei Absätze vorgesehen. Stattdessen sind halbkugelförmige Erhöhungen 38 vorgesehen, um die ein in dieser Ansicht nicht gezeigtes Auflageelement herum schwenkbar ausgebildet ist.

Mit den erfindungsgemäßen Stecker kann eine feste Zugentlastung des Lichtwellenleiters erreicht werden, wobei Stauchungen des Lichtwellenleiters und Überschreitungen einer maximal zulässigen Krümmung des Lichtwellenleiters vermieden werden. Schließlich läßt sich mit dem erfindungsgemäßen Steckverbinder auch eine hohe Packungsdichte erzielen, wobei ein breites Spektrum verschiedener Anwendungsfälle abgedeckt werden kann.

## Patentansprüche

1. Steckverbinder zur lösbaren Verbindung eines mit einer Ferrule (4) versehenen Endbereichs eines Lichtwellenleiters (3) mit einem weiteren Lichtwellenleiter in einer Einsteckrichtung, wobei der Steckverbinder (1) ein Gehäuse (2) mit einem Haltebereich (21) zur Führung der Ferrule (4) aufweist, der so ausgebildet ist, daß die Ferrule (4) bezüglich der Einsteckrichtung winkelig beweglich geführt ist, und wobei das Gehäuse einen Zugentlastungsbereich (7) zur festen Verbindung des Lichtwellenleiters (3) mit dem Gehäuse (2) aufweist, wobei im Bereich zwischen dem Zugentlastungsbereich (7) und dem Haltebereich (21) wenigstens ein Krümmungsbegrenzungsbereich (8) zur Begrenzung der Ausbiegung des Lichtwellenleiters (3) bei winkeliger Verlagerung der Ferrule (4) bezüglich der Einsteckrichtung vorgesehen ist,
**dadurch gekennzeichnet, daß**
der Krümmungsbegrenzungsbereich (8) wenigstens eine im Querschnitt rampenförmige Anlaufwand (13, 14, 15, 16) aufweist, die so ausgebildet und angeordnet ist, daß der Lichtwellenleiter (3) bei winkeliger Verlagerung der Ferrule (4) wenigstens teilweise linienförmig mit der Anlaufwand (13, 14, 15, 16) in Kontakt tritt.

2. Steckverbinder nach Anspruch 1,
**dadurch gekennzeichnet, daß**
der Haltebereich (21) ein bewegliches Auflageelement (9) aufweist, das ein Anschlagende der Ferrule (4) trägt.

3. Steckverbinder nach Anspruch 2,
**dadurch gekennzeichnet, daß**
das Auflageelement (9) um eine quer zur Steckrichtung verlaufende Achse (32, 34) kippbar ausgebildet ist.

4. Steckverbinder nach Anspruch 3,
**dadurch gekennzeichnet, daß**
im Gehäuse (2) Auflagestellen (30, 31; 38) zum Tragen des Auflagelements (9) vorgesehen sind.

5. Steckverbinder nach Anspruch 4,
**dadurch gekennzeichnet, daß**
die Auflagestellen als Auflagekanten (30, 31) ausgebildet sind.

6. Steckverbinder nach Anspruch 4 oder Anspruch 5,
**dadurch gekennzeichnet, daß**
die Auflagestellen als vom Gehäuse (2) abstehende Auflagepunkte (38) ausgebildet sind.

7. Steckverbinder nach Anspruch 5,
**dadurch gekennzeichnet, daß**
das Auflageelement (9) abstehende Auflagepunkte (28, 29) aufweist.

8. Steckverbinder nach einem der vorhergehenden Ansprüche,
**dadurch gekennzeichnet, daß**
daß das Auflageelement (9) als elastisch verformbare Platte ausgebildet ist.

9. Steckverbinder nach Anspruch 8,
**dadurch gekennzeichnet, daß**
das Auflageelement (9) als U-förmiges Metallbauteil ausgebildet ist.

## Claims

1. A plug connector for the detachable connection of an end region, provided with a ferrule (4), of an optical waveguide (3) to a further optical waveguide in a direction of insertion, the plug connector (1) having a housing (2) with a holding region (21) for guiding the ferrule (4), this holding region being constructed such that the ferrule (4) is guided in a manner movable at an angle with respect to the direction of insertion, and the housing having a strain relief region (7) for the firm connection of the optical waveguide (3) to the housing (2), there being provided in the region between the strain relief region (7) and the holding region (21) at least one region (8) limiting curvature in order to limit the flexion of the optical waveguide (3) when the ferrule (4) is laid at an angle with respect to the direction of insertion,
**characterised in that** the region (8) limiting curvature has at least one run-up wall (13, 14, 15, 16) which in cross-section is in the shape of a ramp and is constructed and arranged such that the optical waveguide (3) comes into contact with the run-up wall (13, 14, 15, 16) at least partly linearly when the ferrule (4) is laid at an angle.

2. A plug connector according to Claim 1, **characterised in that** the holding region (21) has a movable supporting element (9) which carries an abutment end of the ferrule (4).

3. A plug connector according to Claim 2, **characterised in that** the supporting element (9) is constructed such that it is tiltable about an axis (32, 34) running transversely with respect to the direction of plugging in.

4. A plug connector according to Claim 3, **characterised in that** support locations (30, 31; 38) are provided in the housing (2) to carry the supporting element (9).

5. A plug connector according to Claim 4, **characterised in that** the support locations are constructed as supporting edges (30, 31).

6. A plug connector according to Claim 4 or Claim 5, **characterised in that** the support locations are constructed as supporting points (38) projecting out of the housing (2).

7. A plug connector according to Claim 5, **characterised in that** the supporting element (9) has projecting supporting points (28, 29).

8. A plug connector according to one of the preceding claims, **characterised in that** the supporting element (9) is constructed as a resiliently deformable plate.

9. A plug connector according to Claim 8, **characterised in that** the supporting element (9) is constructed as a U-shaped metal component.

## Revendications

1. Connecteur à fiche destiné à la connexion libérable d'une zone d'extrémité à ferrule (4) d'un guide d'ondes optiques (3) avec un autre guide d'ondes optiques dans une direction d'enfichage, le connecteur à fiche (1) comportant un boîtier (2) avec une zone de retenue (21) servant à guider la ferrule (4), configurée de sorte que la ferrule (4) est guidée de manière à pouvoir être déplacée angulairement par rapport à la direction d'enfichage, le boîtier comportant une zone de décharge de traction (7) pour raccorder fermement le guide d'ondes optiques (3) avec le boîtier (2), la zone située entre la zone de décharge de traction (7) et la zone de retenue (21) comportant au moins une zone limitant la courbure (8), pour limiter le fléchissement du guide d'ondes optiques (3) lors du déplacement angulaire de la ferrule (4) par rapport à la direction d'enfichage,
**caractérisé en ce que** la zone limitant la courbure (8) comporte au moins une paroi de butée à section transversale en rampe (13, 14, 15, 16), configurée et agencée de sorte qu'un déplacement angulaire de la ferrule (4) entraîne un contact au moins en partie linéaire entre le guide d'ondes optiques (3) et la paroi de butée (13, 14, 15, 16).

2. Connecteur à fiche selon la revendication 2, **caractérisé en ce que** la zone de retenue (21) comporte un élément de support mobile (9) supportant une extrémité de butée de la ferrule (4).

3. Connecteur à fiche selon la revendication 2, **caractérisé en ce que** l'élément de support (9) est configuré de sorte à pouvoir basculer autour d'un axe (32, 34) s'étendant transversalement à la direction d'enfichage.

4. Connecteur à fiche selon la revendication 3, **caractérisé en ce que** le boîtier (2) comporte des emplacements de support (30, 31; 38) destinés à supporter l'élément de support (9).

5. Connecteur à fiche selon la revendication 4, **caractérisé en ce que** les emplacements de support ont la forme de bords de support (30, 31).

6. Connecteur à fiche selon les revendications 4 ou 5, **caractérisé en ce que** les emplacements de support ont la forme de points de support (38) débordant du boîtier (2).

7. Connecteur à fiche selon la revendication 5, **caractérisé en ce que** l'élément de support (9) comporte des points de support en saillie (28, 29).

8. Connecteur à fiche selon l'une des revendications précédentes, **caractérisé en ce que** l'élément de support (9) a la forme d'une plaque à déformation élastique.

9. Connecteur à fiche selon la revendication 8, **caractérisé en ce que** l'élément de support (9) a la forme d'un composant métallique en U.
